# EUROPEAN PATENT APPLICATION

(11) **EP 4 611 222 A1**
(43) Date of publication of application: **03.09.2025**
(21) Application number: 23881271.3
(22) Date of filing: 26.06.2023
(51) Int. Cl.: H02K 1/32, H02K 1/20, H02K 5/20, H02K 9/19

(54) **EFFICIENT OIL-COOLED MOTOR**

(30) Priority: 24.10.2022 CN 202211301319
(71) Applicant: Lishui Founder Intelligent Drive Institute Co., Ltd., Lishui, Zhejiang 323000 (CN); Zhejiang Founder Motor Co., Ltd., Lishui, Zhejiang 323000 (CN)
(72) Inventor: JIA, Fuchun, Zhejiang 323000 (CN); CHEN, Jing, Zhejiang 323000 (CN); LI, Liangzi, Zhejiang 323000 (CN); GU, Zhengyong, Zhejiang 323000 (CN); LI, Xuchu, Zhejiang 323000 (CN)
(74) Representative: Müller Schupfner & Partner Patent- und Rechtsanwaltspartnerschaft mbB (Muc)
(86) International application number: PCT/CN2023/102357
(87) International publication number: WO 2024/087682

(57) **Abstract**

An efficient oil-cooled motor, comprising a housing (1), a front cover plate (2), a rear cover plate (3), a stator (4), a rotating shaft (5) and a rotor core (6). An axial oil channel (52) and a middle radial oil channel (53) are further formed in the rotating shaft (5); a rotor oil channel (61) is further formed in the rotor core (6); a cooling oil inlet B (21) communicated with the axial oil channel (52) is further formed in the front cover plate (2); a water channels (15) spirally arranged along the circumference are further formed in the side wall of the housing (1); a water channel inlet and a water channel outlet which are connected to a heat management water pump are further formed in the side wall of the housing (1); a cooling oil pipe further passes through the water channels (15); a cooling oil inlet A (11) is further formed in the side wall of the housing (1); a annular groove oil channel (41) is further formed on the outer wall of the stator (4); the cooling oil inlet A (11) passes through the housing (1) between two adjacent water channels (15) and then is communicated with the annular groove oil channel (41); one end of the cooling oil pipe is inserted into the rear cover plate (3) and then is communicated with the interior of the housing (1), and the other end of the cooling oil pipe is communicated with the cooling oil inlet A (11) and the cooling oil inlet B (21). The reasonable oil channel distribution design greatly improves the cooling effect for a rotor and the stator (4), so that the overall performance of the motor can be improved.

## Description

This application claims the benefit of priority to Chinese patent application No. 202211301319.9, filed on October 24, 2022, entitled "EFFICIENT OIL-COOLED MOTOR", the entire disclosures of which are incorporated herein by reference.

### TECHNICAL FIELD

The present disclosure relates to the field of electric motor technology for electric vehicles, and more specifically to an efficient oil-cooled motor.

### BACKGROUND

New energy vehicles have extremely high requirements for power density (torque density) of vehicle drive motors due to their requirements for overall vehicle mass and space. On the other hand, high-speed vehicle motors have become an inevitable trend recognized by relevant manufacturers. Embedded permanent magnet synchronous motors have become preferred type of vehicle drive motors due to their wide speed range and high power density.

The vehicle drive motors have high requirements for motor speed, and the maximum speed can often reach tens of thousands of revolutions per minute. Various losses generated during the operation of the drive motors are converted into heat, which causes various components of the drive motors to heat up and increase in temperature. The limit of the temperature directly affects the service life of the drive motors. Moreover, a harmonic magnetic field of a stator armature and a harmonic magnetic field of a rotor magnet will generate large eddy current losses on the magnet, which causes an increase of the temperature of the magnet.

The vehicle drive motors have high requirements for motor speed, and the maximum speed can often reach tens of thousands of revolutions per minute. Various losses generated during the operation of the drive motors are converted into heat, which causes various components of the drive motors to heat up and increase in temperature. The limit of the temperature directly affects the service life of the drive motors. Moreover, a harmonic magnetic field of a stator armature and a harmonic magnetic field of a rotor magnet will generate large eddy current losses on the magnet, which causes an increase of the temperature of the magnet.

### SUMMARY

In order to solve above technical problems, an objective of the present disclosure is to provide an efficient oil-cooled motor, which can provide more sufficient cooling for a rotor.

In order to achieve above objective, the present disclosure adopts following technical solutions:
An efficient oil-cooled motor includes a housing, a front cover plate, a rear cover plate, a stator, a rotating shaft and a rotor core. The stator is arranged in the housing, the front cover plate and the rear cover plate are arranged on two ends of the housing, the rotor core is arranged on the rotating shaft, and two ends of the rotating shaft are rotatably arranged on the front cover plate and the rear cover plate through a bearing respectively. The rotating shaft is further provided with an axial oil channel penetrating through the rotating shaft and a plurality of middle radial oil channels communicated with the axial oil channel. The rotor core is further provided with a plurality of rotor oil channels extending from a center of the rotor core towards two ends and an outside of the rotor core, and the plurality of rotor oil channels are communicated with corresponding middle radial oil channels. The front cover plate is further provided with a cooling oil inlet B communicated with the axial oil channel. A water channel is provided in a side wall of the housing and arranged in a spiral along a circumference of the housing, and a water channel inlet and a water channel outlet are provided on the side wall of the housing and connected with a heat management water pump, wherein a cooling oil pipe is provided in the water channel, and a cooling oil inlet A is provided on the side wall of the housing. An annular groove oil channel is provided in an outer wall of the stator, and the cooling oil inlet A passes through the housing between two adjacent water channels and is communicated with the annular groove oil channel. One end of the cooling oil pipe is inserted into the rear cover plate and communicated with an interior of the housing, and the other end of the cooling oil pipe is communicated with the cooling oil inlet A and the cooling oil inlet B.

Optionally, four middle radial oil channels are arranged in a cross shape.

Optionally, an oil seal is further provided between one end of the rotating shaft and the front cover plate, and an end radial oil channel is provided in the end of the rotating shaft and located between the oil seal and the bearing.

Optionally, an annular arc-shaped groove is provided on an inner side of the front cover plate and the rear cover plate, and an outer end of the rotor oil channels faces the annular arc-shaped groove.

Optionally, a plurality of annular groove oil channels are arranged in parallel intervals, and the outer wall of the stator is further provided with an axial communication oil channel communicated with the plurality of annular groove oil channels.

Optionally, a cooling oil outlet is provided on the rear cover plate adjacent to an outer edge of the rear cover plate, and the cooling oil pipe includes a cooling oil pipe A section and a cooling oil pipe B section, wherein one end of the cooling oil pipe A section is communicated with the cooling oil outlet, and the other end is communicated with an oil pump, wherein the cooling oil pipe B section extends through the water channel, two ends of the cooling oil pipe B section extend out from the water channel inlet and the water channel outlet, and one end is connected with the oil pump.

Optionally, the cooling oil pipe further includes a cooling oil pipe C section, a cooling oil pipe D section and a three-way pipe, wherein the cooling oil pipe B section, the cooling oil pipe C section and the cooling oil pipe D section are communicated through the three-way pipe, and the cooling oil pipe C section and the cooling oil pipe D section are respectively communicated with the cooling oil inlet A and the cooling oil inlet B.

Optionally, the water channel inlet and the water channel outlet are respectively located at an upper part and a lower part of an outer wall of the housing, the water channel inlet is communicated with an upper port of the water channel, and the water channel inlet is communicated with a lower port of the water channel.

The technical solution of the embodiment of the present disclosure has following beneficial effects:

According to the present disclosure, an axial oil channel penetrating through the rotating shaft is provided on the rotating shaft, and cooling oil is distributed to flow through various parts of the rotor core through a plurality of radial oil channels, which not only can cool the rotor core, but also can indirectly cool a magnetic steel arranged on the rotor core. Moreover, a water channel is provided in the outer wall of the housing to cool the cooling oil pipe, which can improve the cooling efficiency. Moreover, a cooling oil channel is provided in the outer wall of the stator, which can cool the stator quickly. The present disclosure provides a reasonable oil channel distribution design, which can greatly improve the cooling effect of the rotor and the stator, thereby improving the overall performance of the motor.

### BRIEF DESCRIPTION OF THE DRAWINGS

The accompanying drawings described herein are intended to provide a further understanding of the present disclosure, and constitute a portion of the present disclosure. Example embodiments of the present disclosure and descriptions thereof are intended to describe the present disclosure, and do not constitute limitations on the present disclosure.
FIG. 1 illustrates a schematic view of an efficient oil-cooled motor from an angle according to the present disclosure;
FIG. 2 illustrates a schematic view of an efficient oil-cooled motor from another angle according to the present disclosure;
FIG. 3 illustrates a schematic view of an axial cross-sectional structure of an efficient oil-cooled motor according to the present disclosure;
FIG. 4 illustrates a schematic view of an radial oblique cross-sectional structure of an efficient oil-cooled motor according to the present disclosure; and
FIG. 5 illustrates a schematic view of a side wall of a stator according to the present disclosure.

Reference numerals: 1: housing; 11: cooling oil inlet A; 15: water channel; 2: front cover plate; 21: cooling oil inlet B; 3: rear cover plate; 31: cooling oil outlet; 32: annular arc-shaped groove; 4: stator; 40: stator core; 41: annular groove oil channel; 42: axial communication oil channel; 43: winding; 5: rotating shaft; 51: end radial oil channel; 52: axial oil channel; 53: middle radial oil channel; 6: rotor core; 61: rotor oil channel; 7: oil seal; 100: oil pump; 101: cooling oil pipe A section; 102: cooling oil pipe B section; 103: cooling oil pipe C section; 104: cooling oil pipe D section; 105: three-way pipe.

### DETAILED DESCRIPTION

It should be noted that the following detailed description is exemplary and is intended to provide further explanation of the present disclosure. Unless defined otherwise, all technical and scientific terms used herein have the same meaning as commonly understood by those skilled in the art.

It should be noted that the terms used herein are for the purpose of describing particular embodiments only, rather than limiting example embodiments according to the present disclosure. For example, as used herein, a singular form is intended to include a plural form, unless the context clearly indicates otherwise. It should be further understood that the terms "comprise" and/or "include" when used in this description, specify the presence of stated features, steps, operations, elements, components and/or groups thereof.

Furthermore, in the description of the present disclosure, it should be understood that the terms "center", "longitudinal", "lateral", "length", "width", "thickness", "upper", "lower", "front", "rear", "left", "right", "vertical", "horizontal", "top", "bottom", "inner", "clockwise", "counterclockwise", and the like, indicate orientations and positional relationships based on those shown in the drawings, and are only for convenience of description and simplicity of description, but do not indicate or imply that the device or element being referred to must have a particular orientation, be constructed and operated in a particular orientation, and thus, should not be considered as limiting the present disclosure.

Furthermore, the terms "first" and "second" are used for descriptive purposes only and are not to be construed as indicating or implying relative importance or implicitly indicating the number of technical features indicated. Thus, a feature defined as "first" or "second" may explicitly or implicitly includes one or more of those features. In the description of the present disclosure, "a plurality" means two or more, unless the context clearly indicates otherwise.

In the present disclosure, unless otherwise expressly specified or limited, the terms "mounted", "coupled", "connected", "fixed" and the like are to be construed broadly and can, for example, be fixedly connected, detachably connected, or integrally connected, can be mechanically or electrically connected, or can be connected directly or indirectly through intervening media, or can be interconnected between two elements. The specific meanings of the above terms in the present disclosure can be understood by those skilled in the art according to specific situations.

In the present disclosure, unless otherwise expressly specified or limited, a first feature "above" or "below" a second feature means that the first feature and the second feature are in direct contact, or the first feature and the second feature are not in direct contact but are in contact with each other through another feature therebetween. Also, the first feature "on", "above" and "over" the second feature means that the first feature is directly above and obliquely above the second feature, or simply indicates that the first feature is at a higher level than the second feature. The first feature "under", "below", and "beneath" the second feature means that the first feature is directly under and obliquely below the second feature, or simply means that the first feature is at a lower level than the second feature.

The present disclosure will be further explained with reference to the following embodiments and drawings.

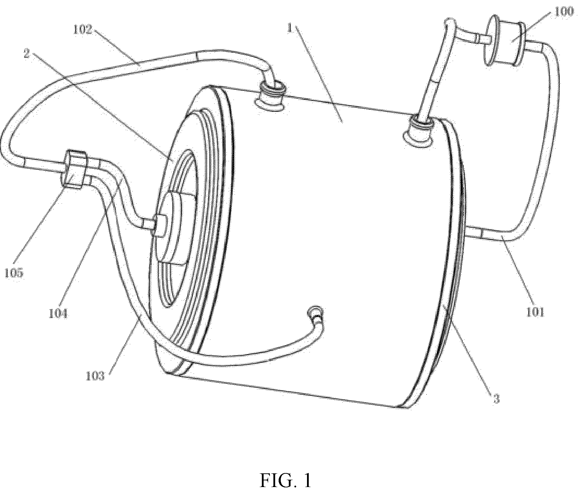

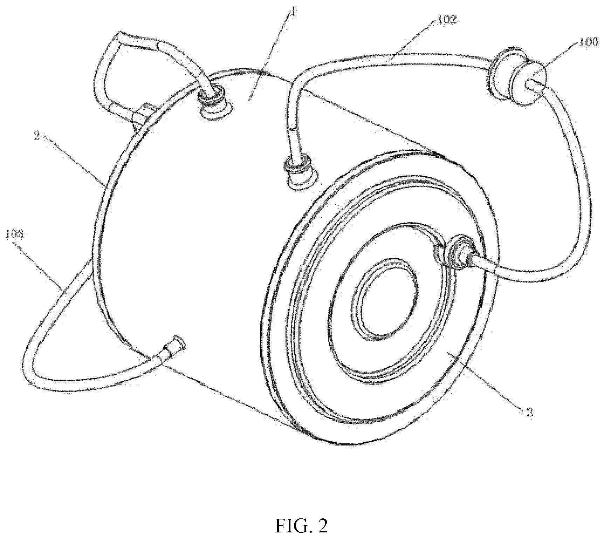

As shown in FIGS. 1 to 3, an efficient oil-cooled motor includes a housing 1, a front cover plate 2, a rear cover plate 3, a stator 4, a rotating shaft 5 and a rotor core 6. The stator 4 is arranged in the housing 1, and the front cover plate 2 and the rear cover plate 3 are arranged on two ends of the housing 1. The rotor core 6 is arranged on the rotating shaft 5, and two ends of the rotating shaft 5 are rotatably arranged on the front cover plate 2 and the rear cover plate 3 through a bearing respectively. The rotating shaft 5 is further provided with an axial oil channel 52 penetrating through the rotating shaft 5 and a plurality of middle radial oil channels 53 communicated with the axial oil channel 52. Four middle radial oil channels 53 are arranged in a cross shape. The rotor core 6 is further provided with a plurality of rotor oil channels 61 extending from a center of the rotor core 6 towards two ends and an outside of the rotor core 6, and the plurality of rotor oil channels 61 are communicated with corresponding middle radial oil channels 53. The front cover plate 2 is further provided with a cooling oil inlet B 21 communicated with the axial oil channel 52.

An annular arc-shaped groove 32 is provided on an inner side of the front cover plate 2 and the rear cover plate 3, and an outer end of the rotor oil channels 61 faces the annular arc-shaped groove 32. The cooling oil thrown out from the rotor oil channels 61 is guided by the annular arc-shaped groove 32, which can cause the cooling oil to be thrown towards an end of a winding and also have a certain cooling effect on the end of the winding.

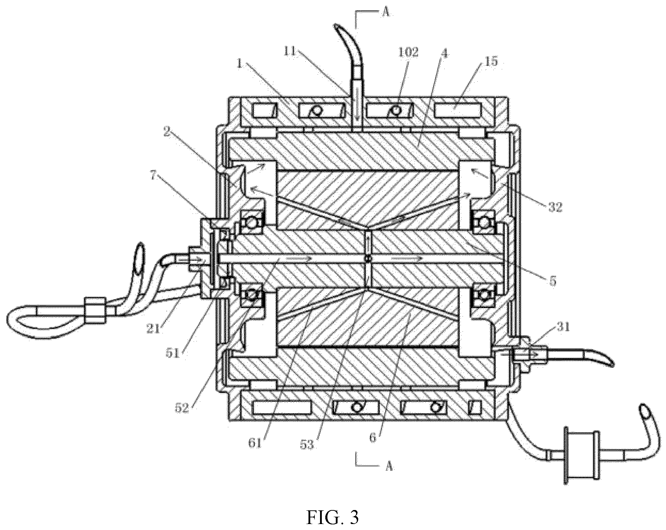

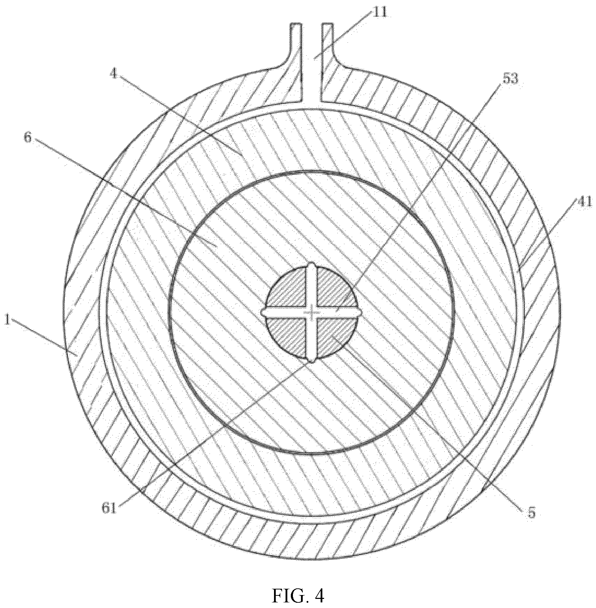

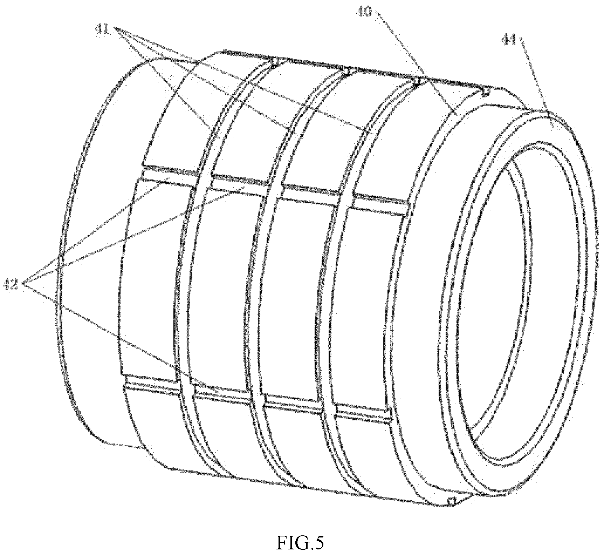

As shown in FIG. 3, a water channel 15 is provided in a side wall of the housing 1 and arranged in a spiral along a circumference of the housing 1, and a water channel inlet and a water channel outlet are provided on the side wall of the housing 1 and connected with a heat management water pump. A cooling oil pipe is provided in the water channel 15. As shown in FIGS. 4 and 5, a cooling oil inlet A 11 is provided on the side wall of the housing 1. An annular groove oil channel 41 is provided in an outer wall of the stator 4, and the cooling oil inlet A 11 passes through the housing 1 between two adjacent water channels 15 and is communicated with the annular groove oil channel 41. One end of the cooling oil pipe is inserted into the rear cover plate 3 and communicated with an interior of the housing 1, and the other end of the cooling oil pipe is communicated with the cooling oil inlet A 11 and the cooling oil inlet B 21.

The specific structure of the cooling oil pipe is as follows: a cooling oil outlet 31 is provided on the rear cover plate 3 adjacent to an outer edge of the rear cover plate 3, and the cooling oil pipe includes a cooling oil pipe A section 101 and a cooling oil pipe B section 102. One end of the cooling oil pipe A section 101 is communicated with the cooling oil outlet 31, and the other end is communicated with an oil pump 100. The cooling oil pipe B section 102 extends through the water channel 15. Two ends of the cooling oil pipe B section 102 extend out from the water channel inlet and the water channel outlet, and one end is connected with the oil pump 100.

The cooling oil pipe further includes a cooling oil pipe C section 103, a cooling oil pipe D section 104 and a three-way pipe 105. The cooling oil pipe B section 102, the cooling oil pipe C section 103 and the cooling oil pipe D section 104 are communicated through the three-way pipe 105, and the cooling oil pipe C section 103 and the cooling oil pipe D section 104 are respectively communicated with the cooling oil inlet A 11 and the cooling oil inlet B 21.

Under the action of the oil pump, the cooling oil flowing from the motor enters the water channel in the side wall of the housing again for accelerated cooling and then enters the rotating shaft and the stator. There are multiple annular groove oil channels 41 on the stator, which are arranged in parallel intervals. The outer wall of the stator 4 is further provided with an axial communication oil channel 42 that communicated with the plurality of annular groove oil channels 41, as shown in FIG. 5. The oil channels here can fully cool the stator and indirectly cool the winding in the stator, thereby improving the heat dissipation capability of the motor.

The water channel inlet and the water channel outlet are respectively located at an upper part and a lower part of an outer wall of the housing. The water channel inlet is communicated with an upper port of the water channel 11, and the water channel inlet is communicated with a lower port of the water channel 11. With this structure, water flow can flow from top to bottom along the water channel, while the cooling oil flows from bottom to top under the action of the oil pump. This opposite direction arrangement can make the water flow take away the heat on the cooling oil pipe faster and improve the cooling efficiency. In other embodiments, the cooling oil pipe and the water channel can also be arranged in a same direction.

An oil seal 7 is further provided between one end of the rotating shaft 5 and the front cover plate 2, and an end radial oil channel 51 is provided in the end of the rotating shaft 5 and located between the oil seal 7 and the bearing. The oil seal can ensure that the cooling oil will not easily leak out when the motor rotor rotates at high speed. The end radial oil channel 51 can allow the cooling oil to flow through the bearing to lubricate the bearing. There are four end radial oil channels 51 arranged in a cross shape. The end radial oil channels 51, the middle radial oil channels 53 and the rotor oil channels 61 are uniformly and symmetrically arranged, so as to not affect dynamic balance of the rotor.

In the description of the present disclosure, the terms such as "one embodiment", "some embodiments", "examples", "specific examples", or "some examples" mean that specific features, structures, materials, or characteristics described in conjunction with the embodiments or examples are included in at least one embodiment or example of the present disclosure. In the description, the illustrative expressions of the above terms may not necessarily refer to the same embodiments or examples. Moreover, the specific features, structures, materials, or characteristics can be combined in an appropriate manner in any one or more embodiments or examples.

Although embodiments of the present disclosure have been shown and described above, it can be understood that the above embodiments are exemplary and cannot be understood as limitations to the present disclosure. An ordinary person skilled in the art can make changes, modifications, substitutions and variations to the above embodiments within the scope of the present disclosure without departing from the principles and objectives of the present disclosure. Any simple modifications, equivalent changes or modifications made to the above embodiments based on the technical essence of the present disclosure still fall within the scope of the technical solution of the present disclosure.

## Claims

1. An efficient oil-cooled motor, comprising a housing (1), a front cover plate (2), a rear cover plate (3), a stator (4), a rotating shaft (5) and a rotor core (6);
wherein the stator (4) is arranged in the housing (1), the front cover plate (2) and the rear cover plate (3) are arranged on two ends of the housing (1), the rotor core (6) is arranged on the rotating shaft (5), and two ends of the rotating shaft (5) are rotatably arranged on the front cover plate (2) and the rear cover plate (3) through a bearing respectively;
wherein the rotating shaft (5) is further provided with an axial oil channel (52) penetrating through the rotating shaft (5) and a plurality of middle radial oil channels (53) communicated with the axial oil channel (52);
wherein the rotor core (6) is further provided with a plurality of rotor oil channels (61) extending from a center of the rotor core (6) towards two ends and an outside of the rotor core (6), and the plurality of rotor oil channels (61) are communicated with corresponding middle radial oil channels (53);
wherein the front cover plate (2) is further provided with a cooling oil inlet B (21) communicated with the axial oil channel (52);
wherein a water channel (15) is provided in a side wall of the housing (1) and arranged in a spiral along a circumference of the housing (1), and a water channel inlet and a water channel outlet are provided on the side wall of the housing (1) and connected with a heat management water pump, wherein a cooling oil pipe is provided in the water channel (15), and a cooling oil inlet A (11) is provided on the side wall of the housing (1);
wherein an annular groove oil channel (41) is provided in an outer wall of the stator (4), and the cooling oil inlet A (11) passes through the housing (1) between two adjacent water channels (15) and is communicated with the annular groove oil channel (41); and
wherein one end of the cooling oil pipe is inserted into the rear cover plate (3) and communicated with an interior of the housing (1), and the other end of the cooling oil pipe is communicated with the cooling oil inlet A (11) and the cooling oil inlet B (21).

2. The efficient oil-cooled motor according to claim 1, wherein four middle radial oil channels (53) are arranged in a cross shape.

3. The efficient oil-cooled motor according to claim 1, wherein an oil seal (7) is further provided between one end of the rotating shaft (5) and the front cover plate (2), and an end radial oil channel (51) is provided in the end of the rotating shaft (5) and located between the oil seal (7) and the bearing.

4. The efficient oil-cooled motor according to claim 1, wherein an annular arc-shaped groove (32) is provided on an inner side of the front cover plate (2) and the rear cover plate (3), and an outer end of the rotor oil channels (61) faces the annular arc-shaped groove (32).

5. The oil-cooled motor according to claim 1, wherein a plurality of annular groove oil channels (41) are arranged in parallel intervals, and the outer wall of the stator (4) is further provided with an axial communication oil channel (42) communicated with the plurality of annular groove oil channels (41).

6. The efficient oil-cooled motor according to claim 1, wherein a cooling oil outlet (31) is provided on the rear cover plate (3) adjacent to an outer edge of the rear cover plate (3), and the cooling oil pipe comprises a cooling oil pipe A section (101) and a cooling oil pipe B section (102), wherein one end of the cooling oil pipe A section (101) is communicated with the cooling oil outlet (31), and the other end is communicated with an oil pump (100), wherein the cooling oil pipe B section (102) extends through the water channel (15), two ends of the cooling oil pipe B section (102) extend out from the water channel inlet and the water channel outlet, and one end is connected with the oil pump (100).

7. The efficient oil-cooled motor according to claim 6, wherein the cooling oil pipe further comprises a cooling oil pipe C section (103), a cooling oil pipe D section (104) and a three-way pipe (105), wherein the cooling oil pipe B section (102), the cooling oil pipe C section (103) and the cooling oil pipe D section (104) are communicated through the three-way pipe (105), and the cooling oil pipe C section (103) and the cooling oil pipe D section (104) are respectively communicated with the cooling oil inlet A (11) and the cooling oil inlet B (21).

8. The oil-cooled motor housing with an integrated heat exchanger according to claim 1, wherein the water channel inlet and the water channel outlet are respectively located at an upper part and a lower part of an outer wall of the housing, the water channel inlet is communicated with an upper port of the water channel (11), and the water channel inlet is communicated with a lower port of the water channel (11).
